# FASCICULE DE BREVET EUROPEEN

(11) **EP 0 403 912 B1**
(45) Date de publication et mention de la délivrance du brevet: **12.07.1995**
(21) Numéro de dépôt: 90110999.1
(22) Date de dépôt: 11.06.1990
(51) Int. Cl.: H04L 12/64

(54) **Procédé et dispositif d'arbitrage pour accès en émission au support de transmission d'un réseau de commutation réparti**
Arbitrierungsverfahren und Vorrichtung für Sendezugriff zu einem Übertragungsmedium eines verteilten Vermittlungsnetzes
Arbitration method and apparatus for the sending access to the transmission medium of a distributed switching network

(30) Priorité: 19.06.1989 FR 8908115
(43) Date de publication de la demande: 27.12.1990
(73) Titulaire: ALCATEL BUSINESS SYSTEMS, F-75008 Paris (FR)
(72) Inventeur: Landez, Jean-Pierre, F-94800 Villejuif (FR); Boullet, Marc, F-92700 Colombes (FR)
(74) Mandataire: Weinmiller, Jürgen

(56) Documents cités:
- EP-A- 0 121 030
- EP-A- 0 122 765
- EP-A- 0 229 684

## Description

La présente invention concerne un procédé et un dispositif d'arbitrage pour accès en émission au support de transmission d'un réseau de commutation réparti.

Il est connu, du document EP-A-0 122 765, un système permettant l'intégration de trafic synchrone et asynchrone sur un même bus de données. Dans ce système, ce bus de données est structuré en trames répétitives, elles-mêmes structurées en intervalles de temps, le trafic est un trafic en mode paquet, et à chaque paquet est affecté une priorité.

Cette priorité comporte une partie fixe (par exemple numéro de la station émettrice) et une partie flexible (fonction du type de trafic, synchrone ou asynchrone) et les conflits d'accès au bus de données sont réglés par comparaison des informations de priorité relatives aux stations en conflit.

La présente invention s'applique notamment à un réseau de commutation réparti multiservices apte à commuter des trafics en mode circuit synchrone, et en mode paquet synchrone ou asynchrone, ledit réseau étant architecturé autour d'un support de transmission partagé dans le temps entre différentes stations, dans lequel :
- le support de transmission est synchrone et structuré en trames elles-mêmes structurées en intervalles de temps, eux-mêmes structurés en temps-cellules, ces derniers étant dimensionnés pour contenir une entité de communication qui peut être suivant le cas une cellule en circuit ou une cellule en paquet segmenté,
- un intervalle de temps idéal d'accès au support de transmission en mode paquet est affecté respectivement aux différentes stations communiquant à l'intérieur de ce réseau,
- il est procédé à chaque temps-cellule et pour l'ensemble des stations, à un arbitrage d'accès au support de transmission, afin d'assurer un accès à ce support, suivant des priorités décroissantes, par des cellules en circuit disponibles à cet instant dans toute station, par des cellules en paquets segmentés synchrones disponibles à cet instant dans toute station ayant un intervalle de temps idéal d'accès antérieur à l'intervalle de temps contenant le temps-cellule considéré, par des cellules en paquets segmentés synchrones disponibles à cet instant dans la station ayant pour intervalle de temps idéal d'accès l'intervalle de temps contenant le temps-cellule considéré, par des cellules en paquets segmentés asynchrones disponibles à cet instant dans toute station ayant pour intervalle de temps idéal d'accès un intervalle de temps antérieur à l'intervalle de temps contenant le temps-cellule considéré, par des cellules en paquets segmentés asynchrones disponibles à cet instant dans la station ayant pour intervalle de temps idéal d'accès l'intervalle de temps contenant le temps-cellule considéré.

Suivant une caractéristique de l'invention, ce procédé d'arbitrage pour accès en émission au support de transmission synchrone d'un réseau de commutation réparti, ledit réseau étant architecturé autour d'un support de transmission partagé dans le temps entre différentes stations, et ledit support étant structuré en positions temporelles répétitives, est essentiellement caractérisé en ce que, une position temporelle idéale d'accès étant affectée, suivant des critères d'accès déterminés, respectivement aux différentes stations communiquant à l'intérieur de ce réseau, et des débordements desdites stations en dehors des positions temporelles idéales ainsi affectées étant autorisées, les conflits d'accès résultant de ces débordements sont réglés par comparaison d'informations de priorité relatives aux différentes stations en conflit, obtenues à partir d'informations de priorité initiales correspondant pour chaque station à la position temporelle idéale qui lui a été affectée suivant lesdits critères d'accès, par modification de celles-ci dans le sens d'une priorité d'accès croissante pour une ancienneté croissante due à ces débordements.

La présente invention a également pour objet un dispositif pour la mise en oeuvre de ce procédé.

D'autres objets et caractéristiques de la présente invention apparaîtront plus clairement à la lecture de la description suivante d'un exemple de réalisation, faite en relation avec les dessins ci-annexés dans lesquels :
- La figure 1 représente le schéma général d'un réseau de commutation réparti suivant l'invention.
- La figure 2 illustre la façon dont est structuré le support de transmission d'un réseau suivant l'invention, ainsi qu'un exemple d'allocation de trafic sur ce support.
- La figure 3a représente l'algorithme de gestion d'accès au support de transmission mis en oeuvre dans chaque station, les différents instants utilisés pour la définition des différentes étapes de cet algorithme étant représentés sur le chronogramme de la figure 3b.
- La figure 4 représente la schéma général d'une station, incluant un dispositif d'arbitrage suivant l'invention.

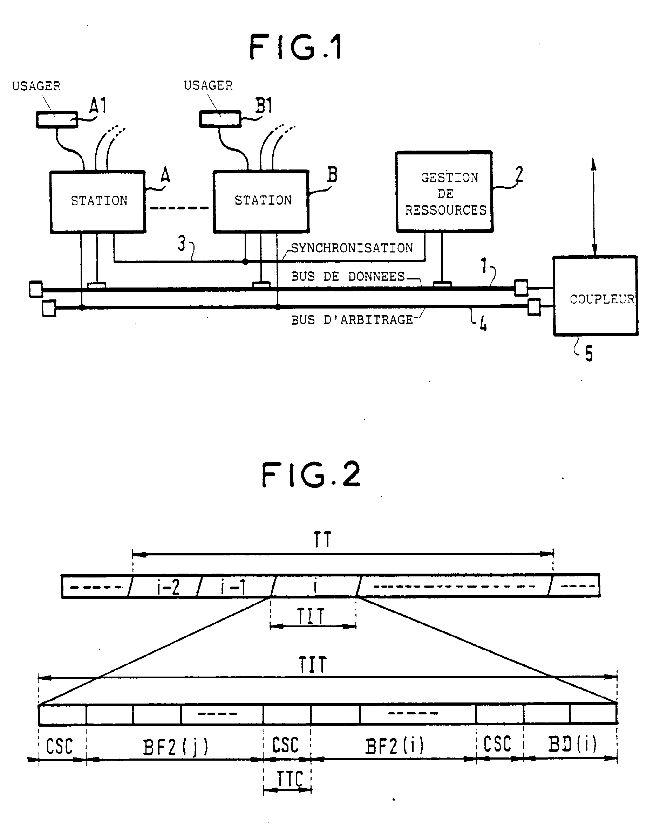

Sur la figure 1 on a représenté un ensemble de "n" stations A, B, C, D... d'un réseau de commutation réparti communiquant entre elles par un support de transmission 1 appelé aussi par la suite bus de données, partagé dans le temps entre différentes stations, chaque station consistant elle même en un point de concentration de trafic provenant de différents utilisateurs A1, A2... B1, B2...

Comme illustré sur la figure 2, ce bus de données est un bus synchrone, structuré en trames répétitives de durée TT elles mêmes structurées en différents intervalles de temps de durée TIT, qui se décomposent à leur tour en différents temps-cellules de durée TTC.

Chaque temps-cellule est dimensionné de manière à contenir suivant le cas soit une cellule dite en circuit, soit une cellule dite en paquet segmenté.

Les trafics traités par ce réseau peuveut être de plusieurs types :
- en mode circuit synchrone, de débit déterminé et fixe au cours du temps, par exemple 64 kbits/s pour un multiplex téléphonique à 32 voies codé suivant le mode MIC, les informations de parole portées par ce multiplex téléphonique constituant lesdites cellules en circuit,
- en mode paquet synchrone, de débit varié et variable au cours du temps, ce qui est par exemple le cas d'informations issues de terminaux de télécopie,
- en mode paquet asynchrone, ce qui est par exemple le cas d'informations issues de terminaux informatiques.

On entend par cellules en paquets segmentés des fragments de paquet tous munis de l'adresse de destination de ce paquet et ayant même dimension qu'une cellule en circuit.

Pour chaque temps-cellule se présentant sur le bus de données les cellules en circuit sont écoulées en priorité, afin d'écouler sans délai ce type de trafic.

Le trafic en mode paquet relatif à une station I est théoriquement écoulé sur un intervalle de temps ITᵢ de même rang i de trames successives, dit intervalle de temps idéal d'accès de cette station, alloué préalablement à celle-ci par un contrôleur de gestion de ressources 2 en fonction de la capacité du support de transmission, de la capacité nominale déjà allouée aux communications en cours à un instant donné, et de la capacité nominale nécessitée par la station faisant une demande d'accès au réseau à cet instant, de sorte que tous les trafics correspondant à ces capacités nominales puissent être écoulés sans délai.

Ce contrôleur de gestion de ressources ne constitue pas l'objet de la présente invention et ne sera donc pas décrit de façon plus détaillée.

En faisant par ailleurs correspondre l'instant théorique (ou idéal) ti d'accès d'une station I au support de transmission, avec la fin de paquettisation (effectuée dans les différentes stations) des données à transmettre sur ce support à cet instant, on minimise par ailleurs le délai d'accès des utilisateurs au support de transmission dans le cas de trafic en mode paquet.

En fixant la durée de trame égale au temps de paquettisation, ceci revient à fixer le début de paquettisation des données relatives à une station I à transmettre à l'instant d'accès idéal ti, avec l'instant d'accès précédant de cette station, soit ti-T_{T}. Sur la figure 1 est ainsi référencée 3 une liaison assurant cette synchronisation des stations en fonction des instants d'accès idéaux délivrés par le contrôleur de gestion de ressources 2.

En prévoyant par ailleurs un "débordement" de trafic en mode paquet synchrone issu d'une station, sur des cellules d'intervalles de temps non initialement affectés à cette station, en cas de "pointes" de trafic en mode paquet synchrone par rapport à la capacité nominale allouée, et en prévoyant inversement un "comblement" par du trafic asynchrone, de cellules non occupées par du trafic synchrone, en cas de "creux" de trafic synchrone, on assure une optimisation de rendement du support de transmission.

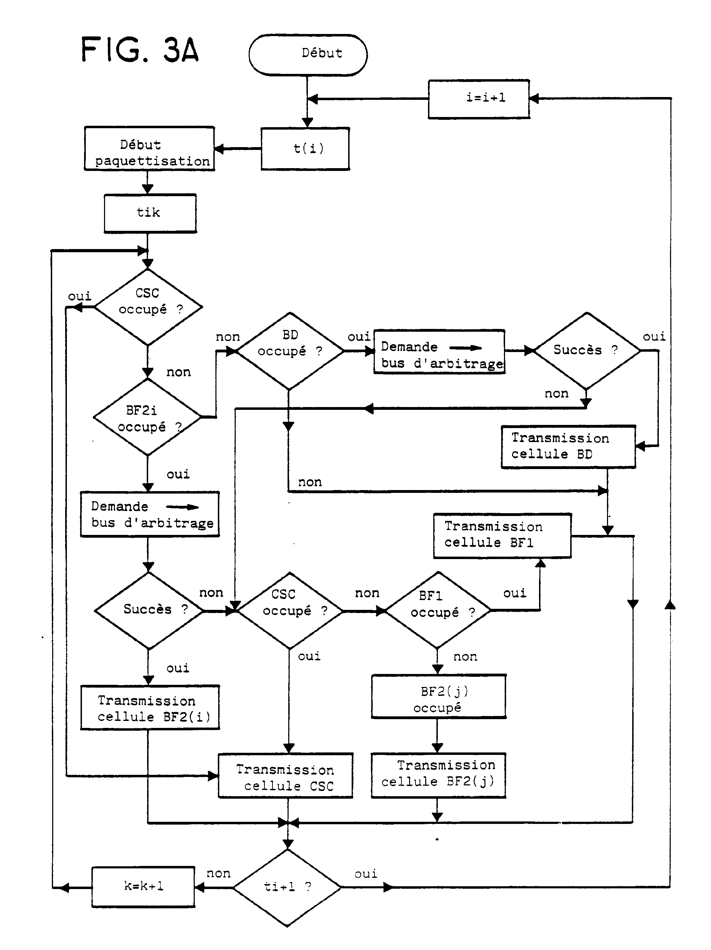

On décrit maintenant en relation avec les figures 3a et 3b l'algorithme de gestion d'accès au support de transmission mis en oeuvre dans chaque station.

A un instant d'accès idéal ti, (début d'un intervalle de temps d'accès idéal ITi), débute la paquettisation de données relatives à une station I à laquelle est affecté idéalement cet intervalle de temps, et qui seront (théoriquement) à transmettre sur le bus de données à l'instant-trame suivant, soit ti + T_{T}.

A cet instant ti, on procède à l'examen des priorités pour la transmission sur le bus de données, d'une part des données en mode circuit stockées dans les différentes stations dans un registre (ou "buffer") référencé CSC, et d'autre part des données déjà paquettisées, dont la paquettisation a commencé à l'instant-trame précédent, soit ti - T_{T} et se trouvant dans un buffer référencé BF2 (BF2 (i) pour la station I) pour le trafic en mode paquet synchrone, ou dans un buffer référencé BD (BD (i) pour la station I) pour le trafic en mode paquet asynchrone.

La gestion de l'accès au bus de données à l'instant ti se fait plus précisément de la façon suivante :
Si des données sont présentes dans un buffer CSC d'une station quelconque, le contenu de celui-ci est "déversé" en priorité sur le bus de données à raison d'une cellule en circuit par temps-cellule "tik" à l'intérieur de l'intervalle de temps ITi considéré.

Si les buffers CSC sont vides, on regarde alors si des données sont présentes dans le buffer BF2 (i) de la station I considérée.
Si tel est le cas, le contenu de celui-ci n'est pas "déversé" directement sur le bus de données, mais après arbitrage d'un conflit d'accès éventuel avec du trafic de même type "débordé" de stations déjà intervenues précédemment sur le bus de données, cet arbitrage se faisant au travers d'un mécanisme d'arbitrage qui sera décrit par la suite. Si la demande de la station I, au travers de ce mécanisme d'arbitrage, réussit, le contenu du buffer BF2 (i) est "déversé" sur le bus de données, temps-cellule après temps-cellule, dans la mesure où le temps d'accès idéal suivant, soit tᵢ₊₁, affecté idéalement à une station I+1 n'est pas atteint, et étant par ailleurs procédé à chaque temps-cellule, au respect de priorité d'une éventuelle cellule en circuit intervenant à cet instant dans toute station.

Lorsque ce buffer BF2 (i) est vide, il est procédé de même à un examen du contenu de buffer BD (i). si celui-ci est plein, il est "déversé" de même cellule par cellule, dans la mesure ou le temps d'accès idéal suivant, soit tᵢ₊₁, n'est pas atteint, et en procédant à chaque temps-cellule à un respect de priorité en faveur d'un éventuel trafic en mode circuit à écouler à l'instant considéré, et en faveur d'un éventuel trafic en mode paquet asynchrone "débordé" de stations déjà intervenues précédemment sur le bus de données.

En cas d'échec d'une demande d'accès du buffer BF2 (i) ou BD (i) après application du mécanisme d'arbitrage, c'est le trafic issu du buffer BF2 (j) ou BD (j) de la station J sélectionnée àl'issue de l'arbitrage comme étant la plus prioritaire, qui est "déversé" sur le bus de données, cellule après cellule, dans la mesure où l'instant d'accès idéal suivant soit t i+1, n'est pas encore atteint, et en procédant également à chaque cellule à un respect de priorité en faveur d'un éventuel trafic en mode circuit à écouler à l'instant considéré.

Lorsque l'instant d'accès idéal suivant est atteint, le processus ainsi décrit est renouvelé.

Il est par ailleurs possible de prévoir un niveau de priorité supplémentaire, entre le trafic en mode circuit et le trafic "débordé" en mode paquet, afin de permettre l'écoulement, avec une priorité correspondante, d'un trafic en mode paquet synchrone "externe" c'est-à-dire venant de l'extérieur de ce réseau et arrivant sur celui-ci via un coupleur (référencé 5 sur la figure 1).

On a désigné sur la figure 3a par BF1 le registre ou "buffer" dans lequel est stocké le trafic correspondant de ce coupleur, étant entendu que ce coupleur comporte également un tampon, ou "buffer" CSC pour le trafic en mode circuit et un buffer BD (i) pour le trafic en mode paquet asynchrone traités respectivement avec la même priorité que le trafic "interne" en mode circuit ou le trafic "interne" en mode paquet asynchrone généré par les stations.

On notera qu'une telle introduction d'un niveau de priorité supplémentaire constitue une cause supplémentaire de "débordement" de trafic en mode paquet généré par les stations.

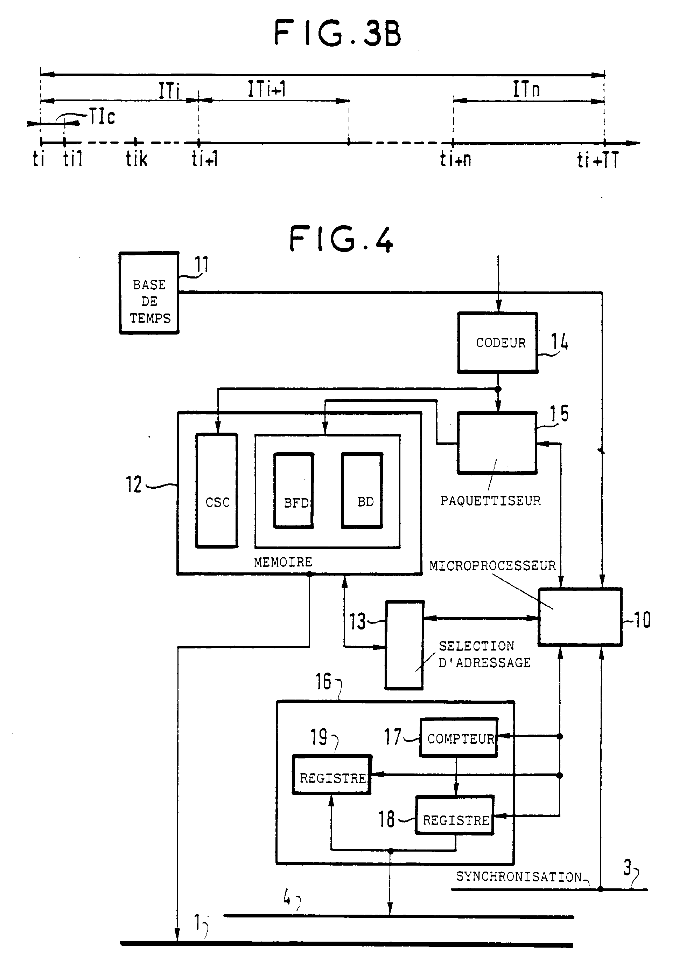

On décrit maintenant, en relation avec la figure 4, le schéma de chacune des stations permettant l'application de l'algorithme décrit ci-dessus. Seuls seront décrits les éléments de chaque station spécifiques à un seul sens de transmission, à savoir de la station vers le bus données.

Ce schéma est organisé autour d'un microprocesseur 10 qui communique avec un certain nombre d'éléments parmi lesquels :
- une base de temps 11, lui fournissant la fréquence de répétition des temps-cellules, intervalles de temps et trames sur le bus de données,
- un organe d'arbitrage 16, communiquant lui même avec un bus d'arbitrage 4 commun aux différentes stations,
- un bloc de mémoire 12 contenant les buffers CSC, BF2 et BD (CSC, BF1 et BD s'il s'agit d'un coupleur) avec lequel il communique par l'intermédiaire d'un organe de sélection d'adressage 13.

Les données inscrites dans ces buffers sont issues d'un codeur 14 pour le trafic en mode circuit, ou d'un paquettiseur 15 pour le trafic en mode paquet, le microprocesseur 10 réagissant sur ce paquettiseur pour assurer la synchronisation de paquettisation décrite plus haut.

Ces deux éléments (codeur et paquettiseur) sont bien connus et ne seront donc pas redécrits ici. On rappellera simplement que le paquettiseur permet de constituer des données en paquets comportant à la fois des données à transmettre et des informations de signalisation nécessaires à leur acheminement, et que le codeur permet de numériser le signal analogique issu des différents utilisateurs raccordés à la station considérée, plusieurs codeurs pouvant constituer un multiplex téléphonique MIC, les informations de signalisation étant transmises séparément des informations (ou octets) de parole.

Les informations appliquées sur le bus d'arbitrage, à travers l'organe d'arbitrage 16, sont obtenues par adjonction d'informations relatives, d'une part, au degré de priorité des différents trafics présents dans les buffers détectés occupés de la mémoire 12, (cette détection d'occupation étant faite par le microprocesseur 10 via l'organe de sélection d'adressage 13), et d'autre part à l'ancienneté de ces trafics non encore écoulés à l'instant considéré (afin d'autoriser les débordements dont il a été question dans ce qui précède).

L'arbitrage est réalisé par comparaison des informations appliquées au même instant par différentes stations sur le bus d'arbitrage.

Plus particulièrement cet arbitrage est réalisé par une opération d'écriture sur ce bus, suivie d'une opération de lecture, une éventuelle coïncidence entre les deux informations, écrite puis lue par une station sur le bus d'arbitrage indiquant un réglement du conflit en faveur de cette station. En l'occurence l'écriture sur le bus d'arbitrage étant telle que celui-ci change d'état par application d'un élément binaire "O", une adresse considérée comme prioritaire à l'issue d'une lecture consécutive sur ce bus étant alors celle qui comporte le plus d'éléments binaires à "O".

Les informations relatives au degré de priorité des différents buffers et à l'ancienneté des trafics à écouler sont établies en conséquence.

Pour l'élaboration des informations d'arbitrage relatives à l'ancienneté des trafics à écouler, l'organe d'arbitrage 16 comporte un compteur 17 initialement chargé par le microprocesseur 10 avec l'intervalle de temps idéal d'accès par la station considérée.

Le microprocesseur 10 de chacune des stations a en effet connaissance de l'intervalle de temps idéal d'accès de cette station, celui-ci lui étant communiqué par le contrôleur de gestion de ressources 2 via la liaison de synchronisation 3 (figure 1).

Ce compteur 17 est décrémenté à chaque temps-cellule et pour chacune des stations en conflit, c'est-à-dire ayant simultanément du trafic à écouler, et réinitialisé avec l'intervalle de temps idéal d'accès en fin de cycle de comptage.

L'organe d'arbitrage 16comporte également un registre 18 pour le stockage des informations à écrire sur le bus d'arbitrage, et un registre 19 pour le stockage des informations lues sur le bus d'arbitrage, commandés par le microprocesseur 10.

Le résultat de l'arbitrage est utilisé par le microprocesseur 10 d'une station pour sélectionner l'adresse du buffer de cette station considéré comme prioritaire à l'issue de l'arbitrage.

Grâce au principe de priorités tournantes obtenu du fait de la présence des compteurs, on évite qu'une station à laquelle a été attribué un intervalle de temps idéal d'accès le moins prioritaire, c'est-à-dire intervenant théoriquement en fin de trame, ne soit pénalisée par un débordement des stations qui l'ont précédée dans le temps, c'est-à-dire auxquelles ont été attribués des intervalles de temps idéaux d'accès plus prioritaires, et qui seraient donc, à défaut d'une telle mesure, à nouveau prioritaires lors des trames suivantes.

## Revendications

1. Procédé d'arbitrage pour accès en émission au support de transmission synchrone d'un réseau de commutation réparti, ledit réseau étant architecturé autour d'un support de transmission (1) partagé dans le temps entre différentes stations (A, ..., B), et ledit support étant structuré en positions temporelles répétitives (TIT) caractérisé en ce que, une position temporelle idéale d'accès étant affectée, suivant des critères d'accès déterminés, respectivement aux différentes stations communiquant à l'intérieur de ce réseau, et des débordements desdites stations en dehors des positions temporelles idéales ainsi affectées étant autorisés, du fait de l'attribution d'un niveau de priorité supérieur pour l'accès audit support de transmission, les conflits d'accès résultant de ces débordements sont réglés par comparaison d'information de priorité relative aux différentes stations en conflit, obtenues à partir d'informations de priorité initiales correspondant pour chaque station à la position temporelle idéale qui lui a été affectée suivant lesdits critères d'accès, par modifications de celles-ci dans le sens d'une priorité d'accès croissante pour une ancienneté croissante due à ces débordements.

2. Procédé selon la revendication 1, pour réseau de commutation réparti multiservices apte à commuter des trafics en mode circuit synchrone et en mode paquet synchrone ou asynchrone, caractérisé en ce que :
- le support de transmission est structuré en trames répétitives (TT) elles-mêmes structurées en intervalles de temps (TIT) eux-mêmes structurés en temps-cellules (TTC), ces derniers étant dimensionnés pour contenir une entité de communication qui peut être suivant le cas, une cellule en circuit ou une cellule en paquet segmenté,
- un intervalle de temps idéal d'accès au support de transmission en mode paquet est affecté respectivement aux différentes stations communiquant à l'intérieur de ce réseau,
- il est procédé à chaque temps-cellule et pour l'ensemble des stations, à un arbitrage d'accès au support de transmission, afin d'assurer un accès à ce support, suivant des priorités décroissantes, par des cellules en circuit disponibles à cet instant dans toute station, par des cellules en paquets segmentés synchrones disponibles à cet instant dans toute station ayant un intervalle de temps idéal d'accès antérieur à l'intervalle de temps contenant le temps-cellule considéré, par des cellules en paquets segmentés synchrones disponibles à cet instant dans la station ayant pour intervalle de temps idéal d'accès l'intervalle de temps contenant le temps-cellule considéré, par des cellules en paquets segmentés asynchrones disponibles à cet instant dans toute station ayant un intervalle de temps idéal d'accès antérieur à l'intervalle de temps contenant le temps-cellule considéré, par des cellules en paquets segmentés asynchrones disponibles à cet instant dans la station ayant pour intervalle de temps idéal d'accès l'intervalle contenant le temps-cellule considéré.

3. Procédé selon la revendication 2, caractérisé en ce que l'information de priorité est obtenue par adjonction au degré de priorité du type de trafic considéré, d'une information relative à l'ancienneté du trafic non écoulé à l'instant considéré.

4. Dispositif d'arbitrage pour accès en émission au support de transmission synchrone d'un réseau de commutation réparti, ledit réseau étant architecturé autour d'un support de transmission (1) partagé dans le temps entre différentes stations (A, ..., B), ledit support de transmission étant structuré en positions temporelles répétitives, dispositif permettant de régler les conflits d'accès résultant des débordements desdites stations en dehors de leurs positions temporelles idéales, par comparaison d'information de priorité relatives aux stations en conflit, suivant le procédé selon l'une des revendications 1 à 3, dispositif caractérisé en ce que ladite comparaison est réalisée au moyen d'un bus d'arbitrage (4) commun aux différentes stations (A...B) sur lequel à chaque position temporelle, chaque station en conflit écrit son information de priorité, et procède ensuite à la lecture de l'information présente sur ce bus, puis à une comparaison des deux informations, lue et écrite, une éventuelle identité entre les deux signifiant un règlement du conflit en faveur de cette station, et
en ce que l'information relative à l'ancienneté du trafic non écoulé est délivrée par un compteur (17) initialement chargé par l'intervalle de temps idéal d'accès, décrémenté à chaque temps-cellule pour chacune des stations en conflit, et réinitialisé par l'intervalle de temps idéal d'accès relatif à chacune de ces stations en fin de cycle de comptage.

## Patentansprüche

1. Streitschlichtungsverfahren für den Zugriff zum synchronen Übertragungsträger eines verteilten Schaltnetzes, das im Kern einen Übertragungsträger (1) besitzt, der im Zeitmultiplex von mehreren Stationen (A, ..., B) zum Senden verwendet wird und der in aufeinanderfolgende zeitliche Positionen (TIT) strukturiert ist, dadurch gekennzeichnet, daß eine ideale Zeitposition für den Zugriff gemäß bestimmten Zugriffskriterien den verschiedenen innerhalb dieses Netzes miteinander verkehrenden Stationen zugewiesen wird und Überschreitungen der zugeteilten idealen Zeitpositionen in den Stationen aufgrund der Zuteilung eines höheren Prioritätsrangs für den Zugriff zum Übertragungsträger zugelassen sind und daß Zugriffskonflikte aufgrund dieser Überschreitungen durch Vergleich von Prioritätsinformationen bezüglich der verschiedenen streitenden Stationen geregelt werden, die aus ursprünglichen Prioritätsinformationen erhalten werden, die für jede Station der idealen ihr zugewiesenen Zeitposition gemäß den Zugriffskriterien entsprechen, indem diese Prioritätsinformationen im Sinn einer zunehmenden Zugriffspriorität für einen zunehmenden Altersrang aufgrund dieser Überschreitungen verändert werden.

2. Verfahren nach Anspruch 1 für ein verteiltes Schaltnetz mit mehreren Diensten, das einen Verkehr im synchronen Schaltmodus und einen Verkehr im synchronen oder asynchronen Paketmodus durchschalten kann, dadurch gekennzeichnet, daß
- der Übertragungsträger in aufeinanderfolgende Rahmen (TT) strukturiert ist, die ihrerseits in Zeitintervalle (TIT) und diese in Zellentakte (TTC) unterteilt sind, wobei die Zellentakte eine Nachrichteneinheit enthalten können, die, je nachdem, eine Schaltzelle oder eine Zelle eines Paketsegments sein kann,
- ein ideales Zeitintervall für den Zugriff zum Übertragungsträger im Paketmodus jeweils den verschiedenen Stationen zugeteilt wird, die in dem Netz miteinander verkehren,
- in jedem Zellentakt und für alle Stationen eine Streitschlichtung des Zugriffs zum Übertragungsträger durchgeführt wird, um einen Zugriff zu diesem Übertragungsträger gemäß abnehmenden Prioritäten durch Schaltzellen zu sichern, die in diesem Augenblick in jeder Station verfügbar sind, durch Zellen von synchronen segmentierten Paketen, die in diesem Augenblick in jeder Station verfügbar sind, deren ideales Zugriffszeitintervall vor dem den betrachteten Zellentakt enthaltenden Zeitintervall liegt, durch Zellen von segmentierten synchronen Paketen, die in diesem Zeitpunkt in der Station verfügbar sind, deren ideales Zugriffszeitintervall das Zeitintervall ist, das den betrachteten Zellentakt enthält, durch Zellen von asynchronen segmentierten Paketen, die in diesem Zeitpunkt in der Station verfügbar sind, deren ideales Zugriffszeitintervall ein Zeitintervall ist, das vor dem Zeitintervall mit dem betrachteten Zellentakt liegt, durch Zellen von asynchronen segmentierten Paketen, die in diesem Zeitpunkt in der Station verfügbar sind, deren ideales Zugriffszeitintervall das den betrachteten Zellentakt enthaltende Zeitintervall ist.

3. Verfahren nach Anspruch 2, dadurch gekennzeichnet, daß die Prioritätsinformation durch Hinzufügung einer Information bezüglich des Altersrangs des im betrachteten Zeitpunkt noch nicht abgewickelten Verkehrs zum Prioritätsrang des betrachteten Verkehrs erhalten wird.

4. Streitschlichtungsverfahren für den Zugriff zum synchronen Übertragungsträger eines verteilten Schaltnetzes, das im Kern einen Übertragungsträger (1) besitzt, der im Zeitmultiplex von mehreren Stationen (A, ..., B) zum Senden verwendet wird und der in aufeinanderfolgende zeitliche Positionen strukturiert ist, wobei die Vorrichtung Zugriffskonflikte durch Vergleich von Prioritätsinformationen bezüglich der streitenden Stationen regeln kann, die sich aus dem Überlauf der Stationen über ihre idealen Zeitpositionen hinaus ergeben, gemäß dem Verfahren nach einem der Ansprüche 1 bis 3, dadurch gekennzeichnet, daß der Vergleich mit einem Streitschlichtungsbus (4) erfolgt, der für die verschiedenen Stationen (A, ..., B) gemeinsam wirkt und auf dem jede in Streit stehende Station in jeder Zeitposition ihre Prioritätsinformation einschreibt, dann die auf diesem Bus vorliegende Information ausliest und schließlich einen Vergleich dieser beiden Informationen, der eingeschriebenen und der gelesenen, durchführt, wobei eine eventuelle Identität zwischen den beiden eine Streitschlichtung zugunsten dieser Station bedeutet, und daß die Information bezüglich des Altersrangs des noch abzuwickelnden Verkehrs von einem Zähler (17) geliefert wird, der ursprünglich mit dem idealen Zugriffszeitintervall geladen und dann mit jedem Zellentakt für jede der in Streitschlichtung stehenden Stationen rückwärtsgezählt sowie vom idealen Zugriffszeitintervall bezüglich jeder dieser Stationen am Ende des Zählzyklus in die Anfangsstellung gebracht wird.

## Claims

1. A method of arbitration for transmit mode access to the synchronous transmission medium of a distributed switching network, the architecture of said network being based on a transmission medium (1) time-shared between different stations (A, ..., B), and said medium being structured in repetitive time positions (TIT), characterised in that, an ideal access time position being assigned on the basis of predetermined access criteria to respective stations communicating within the network, and spillover of said stations outside the ideal time positions thus assigned being allowed, access contention resulting from such spillover is processed by comparing priority information relating to the various stations in contention obtained from initial priority information corresponding for each station to the ideal time position assigned to it on the basis of said access criteria, by modifying the latter in the sense of an increasing access priority for an increasing seniority due to such spillover.

2. Method according to claim 1 for a multiservice distributed switching network adapted to switch traffic in synchronous circuit-switched mode and in synchronous or asynchronous packet-switched mode, characterised in that:
- the transmission medium is structured in repetitive frames (TT) in turn structured in time slots (TIT) in turn structured in time cells (TTC), the latter being sized to contain a communication entity which can be either a circuit-switched cell or a segmented packet-switched cell,
- an ideal time slot for access to the transmission medium in packet-switched mode is assigned to the respective stations communicating within the network,
- in each time cell and for all stations transmission medium access arbitration is applied to procure access to this medium, in decreasing priority order, to circuit-switched cells available at this time in any station, to synchronous segmented packet-switched cells available at this time in any station having an ideal access time slot anterior to the time slot containing the time cell in question, to synchronous segmented packet-switched cells available at this time in the station having as its ideal access time slot the time slot containing the time cell in question, to asynchronous segmented packet-switched cells available at this time in any station having for its ideal access time slot a time slot anterior to the time slot containing the time cell in question, and to asynchronous segmented packet-switched cells available at this time in the station having for its ideal access time slot the time slot containing the time cell in question.

3. Method according to claim 2 characterised in that the priority information is obtained by adding to the priority of the traffic type in question information relating to the seniority of the traffic not serviced at the time in question.

4. Arbitration device for transmit mode access to the synchronous transmission medium of a distributed switching network, the architecture of said network being based on a transmission medium (1) time-shared between different stations (A, ..., B), and said medium being structured in repetitive time positions (TIT), which device enables resolution of access contention resulting from spillover from said stations outside their ideal time position, by comparison of priority information relating to the stations in contention, utilising the method according to any one of claims 1 through 3, which device is characterised in that said comparison is carried out by means of an arbitration bus (4) common to the various stations (A ... B) on which for each time position each station in contention writes its priority information, reads the information present on the bus and compares the read and written information which, if coincident, indicates settling of the contention in favour of said station, and in that the information relating to the seniority of the traffic not serviced is provided by a counter (17) initially loaded by the ideal access time slots and decremented on each time cell for each of the stations in contention and reset by the ideal access time slot relating to each of the stations at the end of the counting cycle.
